# EUROPEAN PATENT APPLICATION

(11) **EP 1 731 925 A1**
(43) Date of publication of application: **13.12.2006**
(21) Application number: 04818244.8
(22) Date of filing: 10.11.2004
(51) Int. Cl.: G01V 3/12, G01V 8/12, G01S 7/292, G01S 13/04

(54) **PROCESSING DEVICE AND OBJECT DETECTION DEVICE**

(30) Priority: 10.11.2003 JP 2003380398
(71) Applicant: OMRON CORPORATION, Kyoto-shi, Kyoto 600-8530 (JP)
(72) Inventor: Mafune, Shoji, Omron Corp., 801, Minamifudodo-cho, Kyoto-shi, Kyoto, 6008530 (JP); Negoro, K., Omron Corp., 801, Minamifudodo-cho, Kyoto-shi, Kyoto, 6008530 (JP); Satoh, Y., Omron Corp., 801, Minamifudodo-cho, Kyoto-shi, Kyoto, 6008530 (JP); Ishihara, N., Omron Corp., 801, Minamifudodo-cho, Kyoto-shi, Kyoto, 6008530 (JP); Nishiguchi, Tadao, Omron Corporation, Shimogyo-ku, Kyoto-shi, Kyoto, 6008530 (JP)
(74) Representative: Weihs, Bruno Konrad
(86) International application number: PCT/JP2004/016639
(87) International publication number: WO 2005/045473

(57) **Abstract**

A processing device 11 that is connected to a sensor 10 for generating an electrical signal varying in connection with approach of a detection target and processes the electrical signal comprises means 7 for extracting the electrical signal from a superposition signal in which the electrical signal varying in connection with the approach of the detection target and a high frequency signal higher in frequency than the electrical signal are superposed, and means 8 for judging the approach of the detection target from the waveform of the electrical signal.

## Description

### Technical Field

The present invention relates to a signal processing technique when approach of a target object to a vehicle, a building or the like is detected.

### Background Art

Recently, attention has been paid to sensors for detecting approach of a target object to a vehicle, a building or the like has been recently noted. Such sensors detect approach of a person, a part of a human body (for example, hand) or the like as a target object by emission of electromagnetic wave or light and reception of the reflected wave. As one of these sensors has been known an impulse sensor for detecting a target object by emitting intermittent electromagnetic wave.

When a signal of electromagnetic wave, light or the like is received and processed in such a sensor, it is frequently required to discriminate a signal component and a noise component from each other. This is because if a noise signal is processed as a signal, the sensor or the like may over-sensitively operate, and thus it erroneously detects that an originally-nonexistent target object exists.

Various noise removing techniques utilizing the difference in frequency band between the signal component and the noise component have been proposed. For example, the signal component and the noise component are separated from each other by an analog low pass filter, a high pass filter, a band pas filter or the like. Furthermore, with respect to a digital signal, a high-frequency noise is removed by averaging processing. However, in some cases it is impossible to perfectly remove noises by using a simple analog filter or executing the averaging processing on digital data. That is, when the frequency band of the signal component and the frequency band of the noise component are sufficiently separated from each other, the signal and the noise can be discriminated from each other by even a simple filter. However, when the frequency band of the signal component and the frequency band of the noise component are proximate to each other, it is difficult to discriminate these components from each other.

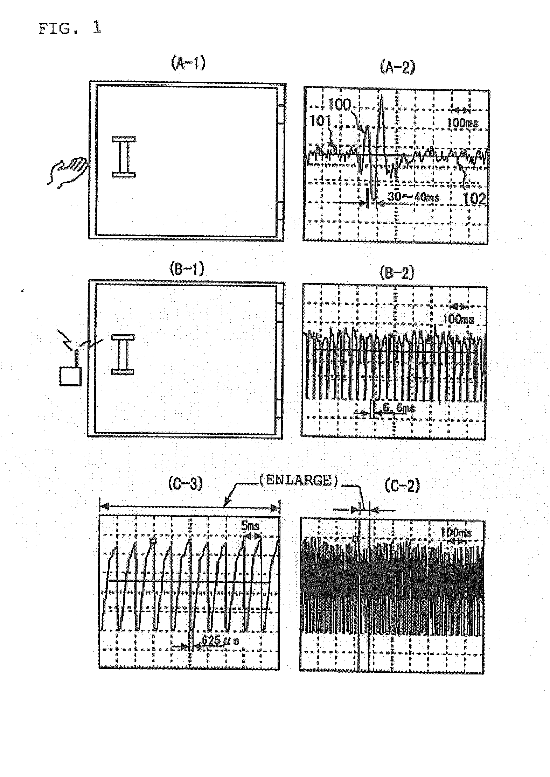

Fig. 1 shows a door in which an impulse sensor for detecting approach of a human hand to the door is installed, and an example of a detection signal of the sensor. In Fig. 1, (A-1) shows a state that the human hand approaches to the door. In this case, it is assumed that the impulse sensor is installed in the neighborhood of the knob of the door. (A-2) shows an output of the impulse sensor when the human hand approaches to the door as shown in (A-1). As shown in (A-2). When the human hand approaches to the door, a vibration waveform 100 comprising a mountain and a valley each of which has a half bandwidth of about 30 to 40 ms is detected. The waveforms 101 and 102 before and after the vibration wave 100 correspond to noises received by the impulse sensor.

In Fig. 1, (B-1) shows a state that a TDMA (Time Division Multiple Access) type cellular phone approaches to this door and (B-2) shows an output of the impulse sensor when the cellular phone approaches to the door like (B-1) . Typically, in the cellular phone, one slot corresponds to 6.6 ms (when a frame has a period of 20 ms, and one frame is constructed by 3 slots). Accordingly, a vibration wave having a mountain or valley of about 6.6 ms in width is detected due to approach of such a cellular phone.

Here, in the case of the actual cellular phone, communications are made between a cellular phone and a base station by carrier waves in a high frequency band of 800 Mz, 1.5 GHz or the like during the time slot. Therefore, such high frequency waves are received from a reception antenna 33 and serve as interference waves. However, such high frequency waves are in a sufficiently high frequency band as compared with a detection signal band of the impulse sensor for detecting approach of a human hand (fundamental wave period of about 30 to 40 ms), and they can be simply removed by a conventional low pass filter or the like. Therefore, in Fig. 1, the carrier waves in such a high frequency band are emitted (the same is applied to (C-2), etc.).

On the other hand, (C-2) shows an output of the impulse sensor when PHS (Personal Handyphone System) approaches to this door in place of the cellular phone. (C-3) is a diagram of the waveform of (C-2) which is enlarged on the time axis. Typically, in PHS, one slot corresponds to 625 µs (when the period of the frame is 5 ms, and one frame is constructed by 8 slots). Accordingly, as shown in (C-3), a vibration waveform having a mountain or valley of about 625 µs in waveform width is detected by the impulse sensor due to approach of such PHS. Communication equipment such as a cellular phone, PHS or the like serves as an oscillation source for interference waves to the impulse sensor.

It has been general to remove interference waves from the detection signal of the impulse sensor by a band pass filter or the like. However, even when such a filter exerts effect on interference waves having small power, it cannot perfectly remove interference waves having large power in some cases. Particularly, in the case of the TDMA type cellular phone, a vibration component caused by switching of time slots is contained at a lower frequency band side near to the band of the sensor detection signal as compared with the carrier waves in the high frequency band. Such a vibration component is difficult to be discriminated from the detection signal of the impulse sensor.

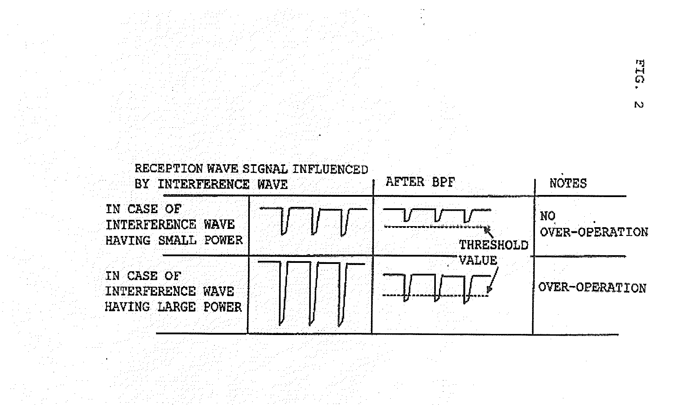

Fig. 2 shows a processing result of a detection signal of a conventional impulse sensor containing a band pass filter. The upper stage of Fig. 2 shows the processing of the band pass filter to which an interference wave having small power is input. When the power of the interference wave is small, the interference wave is removed by the band pass filter, and thus the signal passed through the band pass filter does not reach a threshold value. Accordingly, an over-operation (an operation of recognizing that a target object exists although no target object actually exists) of the impulse sensor can be prevented.

The lower stage of Fig. 2 shows the processing of the band pass filter when an interference wave having large power is input. When the power of the interference wave is large, the interference wave cannot be perfectly removed by the band pass filter. As a result, the signal passed through the band pass filter may reach the threshold value in some cases. In this case, the over-operation of the impulse sensor cannot be prevented, and it is judged that a human exists although no human exists. As described above, when a band pass filter is used, the over-operation of the impulse sensor which is caused by the interference wave in the band near the band of the detection signal of the impulse sensor cannot be perfectly prevented.

As a countermeasure to such a problem has been proposed a noise removing method inherent to a device as a signal processing target. For example, there has been proposed a technique for stopping the output of a receiving portion in a noise blanker circuit adapted to transmission equipment when an interference wave is input, thereby suppressing an adverse effect of the interference wave (see patent document 1).

However, the conventional technique has the following problem.
(1) When the noise blanker circuit described above is applied to a sensor circuit, the detection operation of the sensor circuit is stopped during the noise blanker operation. That is, the over-operation under which the sensor is responsive to target objects other than a target to be detected can be suppressed, however, a non-operation in which the sensor does not detect a target to be detected occurs.
(2) The circuit construction is complicated. Accordingly, miniaturization and reduction of power are difficult, and applicable fields are restricted.
   Patent Document 1: JP-UM-A-6-52237

### Disclosure of the Invention

### Problem to be Solved by the Invention

Therefore, the present invention pays attention to the signal characteristic of a sensor for detecting approach of a detection target and proposes a signal processing technique of solving the problem of the prior art. That is, an object of the present invention is to provide a technique in which even noises in a band proximate to the detection signal of a sensor for detecting approach of a detection target by emission of electromagnetic wave or light and reception of the reflected wave can be easily and surely removed.

### Means of solving the Problem

The present invention is a processing device that is connected to a sensor for generating an electrical signal varying in connection with approach of a detection target and processes the electrical signal, and comprises means for extracting the electrical signal from a superposition signal in which the electrical signal varying in connection with the approach of the detection target and a high frequency signal higher in frequency than the electrical signal are superposed, and means for judging the approach of the detection target from the waveform of the electrical signal.

The processing device extracts the electrical signal from the signal in which the electrical signal varying in connection with the approach of the detection target and the high frequency signal higher in frequency than the electrical signal concerned are superposed, and judges the approach of the detection target from the waveform of the electrical signal. Therefore, the approach of the detection target can be judged with removing the effect of the high frequency signal.

Furthermore, the present invention may be a target object detecting device that comprises a sensor for generating an electrical signal varying in connection with approach of a detection target, means for extracting the electrical signal from a superposition signal in which the electrical signal varying in connection with the approach of the detection target and a high frequency signal higher in frequency than the electrical signal are superposed, and means for judging the approach of the detection target from the waveform of the electrical signal.

Preferably, the sensor may be equipped with a generator for generating an impulse signal at a predetermined time interval, an emitting portion for emitting the impulse signal, a receiving portion for receiving a reflection signal of the emitted impulse signal from a detection target, and a detecting portion for generating an electrical signal varying with the impulse signal and the reflection signal.

Preferably, the emitting portion may emit the impulse signal by electromagnetic wave or light, and the receiving portion may receive the reflection signal of electromagnetic wave or light.

The sensor may be mounted in opening/closing operation means for an entrance of a building, opening/closing operation means for a platform of a vehicle, opening/closing operation means for a platform of a ship, opening/closing operation means of a platform of passenger transporting means, opening/closing operation means for an entrance of transporting means or operating means for operating a predetermined operation target object. Furthermore, the sensor may be mounted in the outer wall of an entrance opening/closing portion at which operating means providing an opening/closing function of an entrance of a building is disposed, in the outer wall of an platform opening/closing portion at which opening/closing operation means of an entrance of a vehicle is disposed, in the outer wall of a platform opening/closing portion at which opening/closing operation means of a platform of a ship is disposed, in the outer wall of a platform opening/closing portion at which operation means providing an opening/closing function of a platform of passenger transporting means is disposed, in the outer wall of an entrance opening/closing portion at which operating means providing an opening/closing function of an entrance of transporting means is disposed, or in a housing in which operating means providing a function of operating a predetermined operation target object is disposed.

The sensor is provided to these opening/closing operation means, in the outer walls to which the opening/closing operating means is disposed or in the housing, whereby the approach of the detection target which will operate these opening/closing operation means can be surely detected.

### Effect of the Invention

According to the present invention, in the sensor for detecting the approach of the detection target by emission of electromagnetic wave or light and reception of the reflection wave thereof, the noises in the band near to the detection signal band of the sensor can be easily and surely removed.

### Brief Description of the Drawings

[Fig. 1] Fig. 1 is a diagram showing a door in which an impulse sensor is installed, and a detection signal of the sensor.
[Fig. 2] Fig. 2 is a diagram showing an example of a processing result of a conventional band pass filter.
[Fig. 3] Fig. 3 is a diagram showing the principle of an embodiment of the present invention.
[Fig. 4] Fig. 4 is a diagram showing the principle construction of the impulse sensor.
[Fig. 5] Fig. 5 is a diagram showing the construction of the impulse sensor according to an embodiment 1.
[Fig. 6] Fig. 6 is a processing example in which the detection signal of the impulse sensor is processed by a binary integration unit.
[Fig. 7] Fig. 7 is a diagram showing the construction of an impulse sensor according to an embodiment 2.
[Fig. 8] Fig. 8 is a flowchart showing the processing executed in an approaching object presence/absence judging portion according to the second embodiment.
[Fig. 9] Fig. 9 is a diagram showing the relationship of Vht1 and a continuing time.
[Fig. 10] Fig. 10 is a diagram showing an example in which the impulse sensor is accommodated in a projection of a press button switch.
[Fig. 11] Fig. 11 is a diagram showing an example in which the impulse sensor is accommodated in a door handle.
[Fig. 12] Fig. 12 is a diagram showing an example in which the impulse sensor is accommodated in a door at the back side of a door handle.
[Fig. 13] Fig. 13 shows an example of the door handle to which the impulse sensor is applied.

### Description of Reference Numerals

- 10: impulse sensor
- 11: sensor circuit
- 1: local oscillator
- 2: impulse generator
- 3: detecting portion
- 4: threshold value judging portion
- 5: binary processor
- 6: integration processor
- 32: transmitting antenna
- 33: reception antenna

### Best Modes for Carrying Out the Invention

Best modes for carrying out the invention will be described with reference to the drawings. The constructions of the following embodiments are exemplifications and thus the present invention is not limited to the construction of the embodiments.

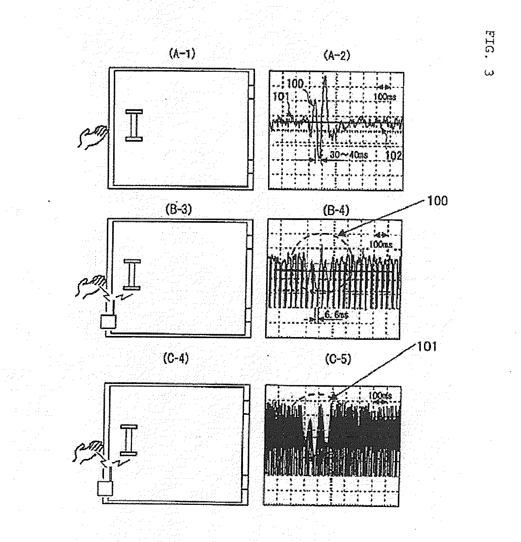

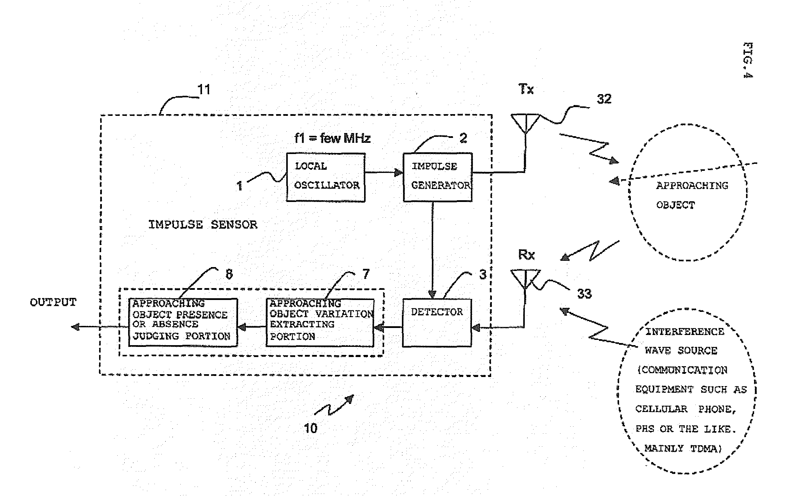

Fig. 3 is a diagram showing the principle of this embodiment, and Fig. 4 is a diagram showing the principle construction of an impulse sensor 10 according to an embodiment. In Fig. 3, (A-1) and (A-2) are the same as shown in Fig. 1, and show examples of a door in which the impulse sensor is installed and a detection signal of the sensor.

When a TDMA type cellular phone or PHS approaches to the impulse sensor as described above, the vibration component caused by the switching of time slots is superposed on the detection signal associated with the approach of a hand shown in (A-2) and detected as a noise as described above.

(B-4) shows a detection signal (the period is equal to about several tens ms) associated with the approach of the hand, the detection signal being superposed on the high-frequency noise (the period is equal to 20 ms and one slot is equal to about 6.6 ms) and indicated in the neighborhood of a circle 100. Furthermore, (C-5) shows a detection signal caused by the approach of the hand superposed on a high-frequency noise (the period is equal to 5 ms and one slot is equal to about 625 µs) in the neighborhood of a circle 101. As described above, in a case where a high-frequency generating body such as a cellular phone, PHS or the like exists around the impulse sensor, a detection signal having a relatively low frequency which is caused by the approach of a hand appears as a variation of an envelope curve at an upper side (or lower side) of a noise having a high frequency when the approach of the hand is detected by the impulse sensor.

Accordingly, even under such an environment that a high frequency noise exists, the approach of the hand could be accurately detected by the impulse sensor if the detection signal of the low frequency which is caused by the approach of the hand can be separated and extracted.

As shown in Fig. 4, the impulse sensor 10 has a sensor circuit 11, a transmission antenna 32, and a reception antenna 33. The sensor circuit 11 has a local oscillator 1, an impulse generator 2, a detector 3, an approaching object variation extracting portion 7 and an approaching object presence or absence judging portion 8.

The local oscillator 1 generates a reference clock of impulse radar. The impulse generator 2 forms a predetermined rectangular wave from reference clocks generated in the local oscillator 1 (plural clock pulses are made continuous, and high frequency pulses continuing for a predetermined period and corresponding to the rectangular wave is formed), and input to the transmission antenna 32. Accordingly, the transmission antenna 32 is turned on and off for the predetermined period corresponding to the rectangular wave, and a transmission wave is radiated.

The transmission wave thus radiated is reflected by a human hand or the like as a detection target, and received as a reflection wave from the reception antenna 33. The detector 3 detects a reflection wave signal on the basis of the reception signal received from the reception antenna 33 and the high frequency pulse from the impulse generator 2. For example, in an embodiment of a key managing device proposed in Japanese Patent Application No. 2003-009656 by this applicant, the detector 3 is implemented by a beat generating circuit of a transmission clock and a reception clock and a sample hold circuit.

In this reflection wave signal, the phase thereof with respect to the signal of the local oscillator 1 or the impulse generator 2 is varied by the motion of a human hand as a detection target. As a result, the reflection wave signal is varied in connection with the motion of the human hand. Furthermore, the amplitude of the reflection wave signal is the value corresponding to the dielectric constant of the human hand or the like as the detection target. Furthermore, when a high frequency generating body exists around the impulse sensor 10, a reflection wave signal is detected while superposed on an interference wave having a high frequency as shown in Fig. 3.

The approaching object variation extracting portion 7 extracts the reflection wave signal portion from the superposition signal of the reflection wave signal and the high-frequency interference wave. When the signal component extracted by the approaching object variation extracting portion 7 satisfies a predetermined reference, the approaching object presence or absence judging portion 8 judges that a detection object such as a human hand or the like is detected.

### Embodiment 1

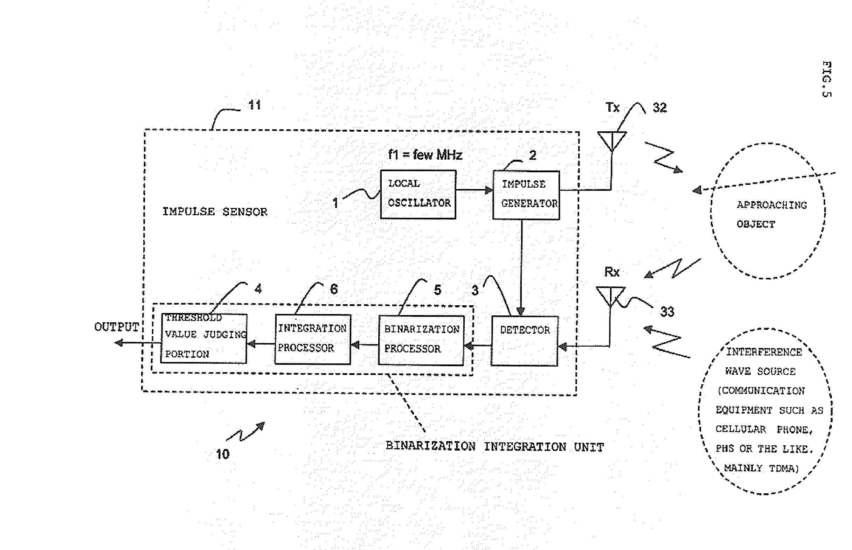

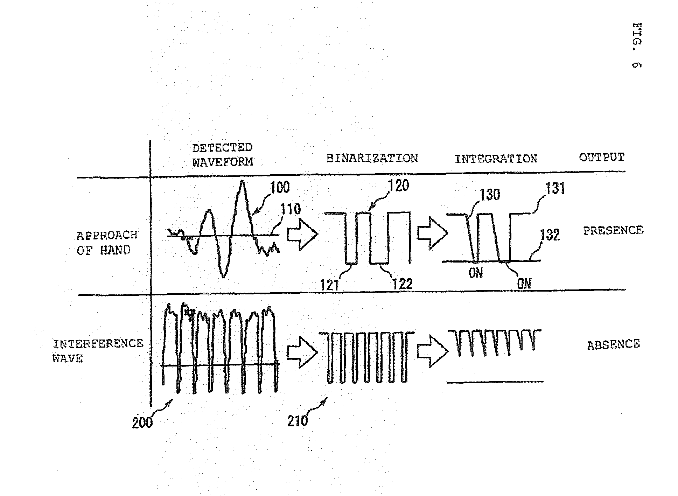

An embodiment 1 of the present invention will be described with reference to Figs. 5 and 6. Fig. 5 is a diagram showing an impulse sensor 10 according to this embodiment in which a binary integration unit is mounted, and Fig. 6 shows an example of the processing of processing the detection signal of the impulse sensor 10 according to this embodiment by the binary integration unit.

As shown in Fig. 5, the impulse sensor 10 has a sensor circuit 11, a transmission antenna 32 and a reception antenna 33. The sensor circuit 11 comprises a local oscillator 1, an impulse generator 2, a detector 3, a binary processor 5, an integration processor 6, and a threshold value judging portion 4. The transmission antenna 32, the reception antenna 33, the local oscillator 1, the impulse generator 2 and the detector 3 have the same constructions as shown in Fig. 4, and the description thereof is omitted. In this embodiment, the binary processor 5, the integration processor 6 and the threshold value judging portion 4 are provided as the constituent elements corresponding to the approaching object variation extracting portion 7 and the approaching object presence or absence judging portion 8 as shown in Fig. 5.

The output of the detector 3 (hereinafter referred to as detection signal) is input to the binary processor 5. The binary processor 5 has a comparator, and binarizes the output of the detector 3 to high potential or low potential in accordance with whether the detection signal is equal to a predetermined value or more (exceeds a predetermined value). The binarization generates a signal having a rectangular shape.

The integration processor 6 is a so-called analog integration circuit, and integrates a signal input from the binarization processor (hereinafter referred to as binary signal). The binarization processor 5 and the integration processor 6 are called as a binarization integration unit. The binary signal has the shape corresponding to a combination of plural rectangular waveforms, and the signal after the integration becomes a ramp waveform (so-called sawtooth wave).

The slope of the sawtooth wave has a predetermined value dependent on the time constant of the integration circuit of the integration processor 6. Accordingly, when the width of the rectangular shape of the binary signal is large (the time corresponding to the width of the rectangle is long), the variation amount of the ramp waveform (the variation amount of the output value) increases. That is, the height of the mountain of the sawtooth wave is high (the depth of the valley is deep).

On the other hand, when the width of the rectangular shape of the binary signal is small (the time corresponding to the width of the rectangle is short), the variation of the ramp waveform (the variation amount of the output value) decreases. That is, the height of the mountain of the sawtooth wave is low (the depth of the valley is shallow).

The threshold value judging portion 4 contains a comparator, for example, and outputs a high-potential (H) or low potential (LO) signal in accordance with whether the output of the detector 3 is above a predetermined value or not (whether it exceeds a predetermined value or not).

Accordingly, in the threshold value judging portion 4 to which the output of the integration processor 6 (hereinafter referred to as integration signal) is input, with respect to the binary signal whose rectangular waveform has a sufficiently large width, the integration signal value thereof after the binary signal integration exceeds a predetermined threshold value. On the other hand, with respect to the binary signal whose rectangular waveform has a sufficiently small width, the integration signal value thereof after the binary signal integration does not exceed the predetermined threshold value.

Fig. 6 shows a processing example achieved by processing the detection signal of the impulse sensor 10 (detector 3) by the binarization integration unit. In Fig. 6, the upper stage shows the signal waveform when a hand is approached. When the hand is approached, the detector 3 outputs a vibration waveform 100 having a mountain and a valley of about 30 ms to 40 ms in half width to the peak.

The rectangular signal 120 is generated by binarizing the vibration waveform 100 with a predetermined slice level 110. Then, by integrating the rectangular signal 120, the ramp waveform 130 is generated. The ramp waveform continuously varies with a predetermined slope for a section during which the rectangular waveform of the rectangular signal continues (for example, during the section 121, 122). As a result, the ramp waveform starts from an initial value 131 and reaches a threshold value 132, for example. The section of ON after the ramp waveform reaches the threshold value 132 (the section indicated by a character "ON" in Fig. 6) is dependent on the width of the rectangular signal 120, thus the width of the waveform of the detection signal (for example, a half width).

The processing for an interference wave 200 is shown at the lower stage of Fig. 6. With respect to the interference wave 200 caused by a cellular phone, the detection signal has a waveform of about 6.6 ms in width. With respect to the interference wave 200 caused by PHS, the detection signal has a waveform of about 625 µs.

When the waveform is binarized, a rectangular signal 210 having a narrower width is generated as compared with the detection achieved when a hand is approached. Accordingly, even when the rectangular signal 210 is integrated by the integration circuit having the same time constant as when the hand is approached, the section of the rectangle is finished before the integration signal value output reaches the threshold value because the rectangle width of the rectangular signal 210 is narrow. As a result, the threshold judging portion 4 is not set to ON.

That is, the impulse sensor 10 containing the binarization integration unit discriminates the signal on the basis of the time width, and exercises the stable interference wave removing function irrespective of the magnitude of power of the interference wave. Particularly, even the noses in a band proximate to the detection signal band of the impulse sensor (for example, the period of the fundamental wave ranges from 30 ms to 40 ms) can be surely discriminated by combining the time constant of the integration processor 6 and the threshold value of the threshold value judging portion 4.

### <Modification>

In the above embodiment, the binarization processor 5 is constructed by the comparator, and the integration processor 6 is constructed by the analog integration circuit. However, the embodiment of the present invention is not limited to the above construction. For example, the signal binary processor 5 and the integration processor 6 may be implemented by signal processing on digital data, for example, a signal processing program installed in DSP (Digital Signal Processor).

In the above embodiment, the binarization integration is applied to the target object detection processing based on the impulse type radar. However, the embodiment of the present invention is not limited to the above mode. For example, the present invention may be implemented in a sensor for emitting light and receiving the reflection waveform thereof.

### Embodiment 2

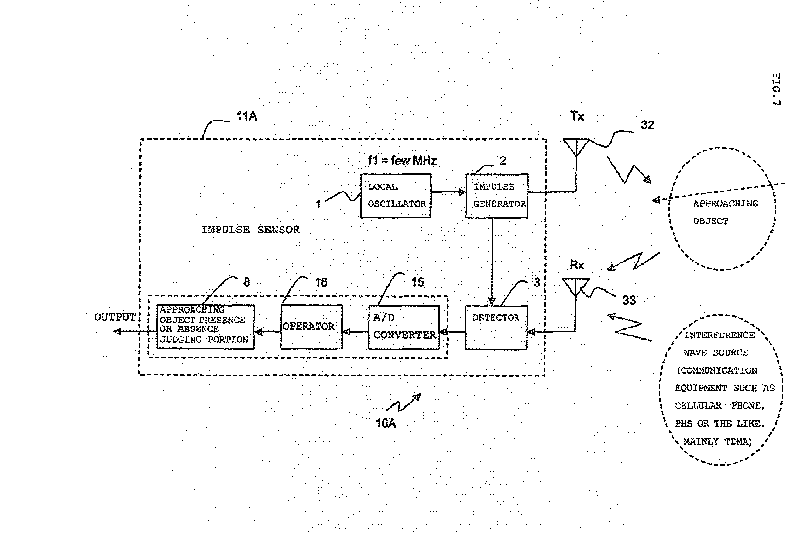

An embodiment 2 of the present invention will be described with reference to Figs. 7 to 9. In the embodiment 1, the construction of the sensor circuit 11 for discriminating the detection signal and the processing example thereof are shown by the binarization processor 5, the integration processor 6 and the threshold value judging portion 4 even when the noise in the band approximate to the band of the detection signal of the impulse sensor 10 is superposed on the detection signal. In this embodiment, in place of the binarization processor 5, the integration processor 6 and the threshold value judging portion 4, by analyzing a waveform shape, a reflection wave signal is extracted from a signal in which a high-frequency noise of a higher band than the reflection wave signal is superposed on the reflection wave signal. The other construction and action of this embodiment are the same as those of the embodiment 1. Therefore, the same constituent elements are represented by the same reference numerals, and the description thereof is omitted.

Fig. 7 is a diagram showing the construction of an impulse sensor 10A according to this embodiment. The impulse sensor 10A is different from the embodiment 1 in that the sensor circuit 11A has an A/D converter 15 for receiving a detection signal of the detector 3, an operating portion 16 for processing the detection signal converted to digital data by the A/D converter 15 and an approaching object presence or absence judging portion 8 for judging the presence or absence of an approaching object on the basis of the output signal of the operating portion 16.

The A/D converter 15 converts the detection signal detected by the detector 3 into digital data. The operating portion 16 is implemented by CPU (Central Processing Unit), DSP (Digital Signal Processor) or the like, and executes the signal processing on the detection signal converted to the digital data. For example, the operating portion 16 extracts an envelop curve signal from a waveform like (B-4) (C-5) shown in Fig. 3.

The approaching object judging portion 8 judges the presence or absence of the approaching object from the result of the signal processing in the operating portion 16. For example, the approaching object judging portion 8 detects the presence or absence of the approaching object by judging whether the envelop curve signal extracted by the operating portion 16 satisfies a predetermined standard. In Fig. 7, the operating portion 16 and the approaching object presence or absence judging portion 8 are shown by different function blocks, however, the operating portion 16 and the approaching object judging portion 8 may be a signal processing program executed on single CPU. Furthermore, these may be a signal processing program executed on single DSP. Still furthermore, the operating portion 16 and the approaching object presence or absence judging portion 8 may be implemented by hardware such as an addition/subtraction circuit, a multiplying circuit, a logical operation circuit or the like.

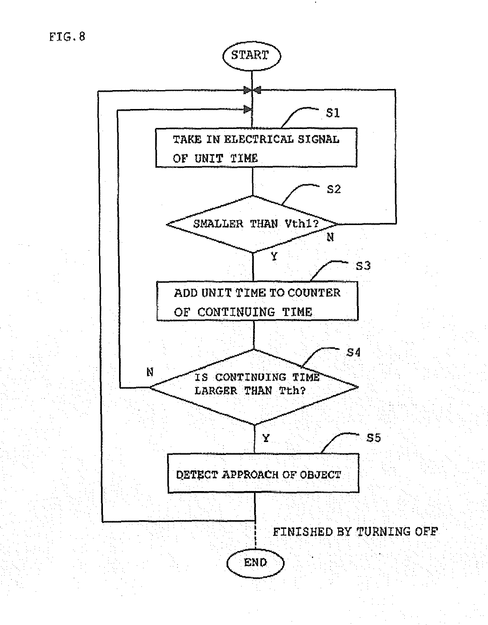

Fig. 8 shows a flowchart showing the processing executed in the approaching object presence or absence judging portion 8. In this processing, the detection signal (electrical signal) converted to the digital data are input from the A/D converter 15 to the operating portion 16 by the minute. The operating portion 16 shapes the waveform of the detection signal converted to the digital data and delivers it to the approaching object presence or absence judging portion 8. For example, the operating portion 16 extracts an envelop curve signal from the detection signal converted to the digital data. The extracting procedure of the envelop curve is broadly known, and thus the description thereof is omitted.

The approaching object presence or absence judging portion 8 successively takes in the detection signal at each time (the electrical signal corresponding to the envelop curve during unit time section) (S1). Subsequently, the approaching object presence or absence judging portion 8 judges whether the detection signal is smaller than a predetermined threshold value Vth1 (S2). If the detection signal is not smaller than the predetermined threshold value Vth1, the approaching object presence or absence judging portion 8 returns the control to S1, and processes the next detection signal.

On the other hand, if in the judgment of S2 the detection signal is smaller than the predetermined threshold value Vth1, the approaching object presence or absence judging portion 8 adds the unit time of the electrical signal and calculates the continuing time (S3). This continuing time is a time for which the detection signal is continuously lower than the threshold value Vth1. The operating portion 8 judges whether the continuing time is larger than a predetermined threshold value Tth (S4).

When the continuing time is not larger than the predetermined threshold value Tth, the approaching object presence or absence judging portion 8 returns the control to S1 to process the next detection signal. On the other hand, when the continuing time is larger than the predetermined threshold value Vth, the approaching object presence or absence judging portion 8 detects that the object approaches (S5). The above processing is finished when the power source is turned off.

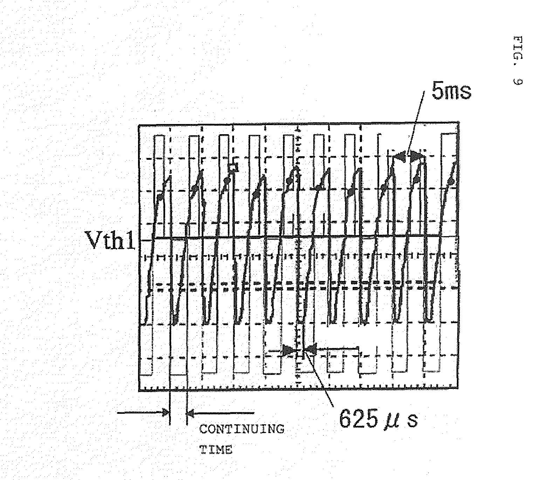

Fig. 9 shows the relationship between Vth1 and the continuing time. Fig. 9 is an enlarged view of the waveform of (B-4) (C-5) shown in Fig. 3. Here, the threshold value Vth1 is a reference value for the value of the detection signal (for example, the voltage value). The continuing time is a time for which the detection signal is continuously lower than this threshold value Vth1. For example, in the case of a waveform achieved when a human hand approaches, the continuing time is equal to about 30 to 40 ms. On the other hand, in the case of a cellular phone or PHS, it is equal to the time corresponding to the period of the vibration component caused by the slot switching from which the carrier wave is removed, that is, substantially the time corresponding to the time width of the slot.

As described above, according to the impulse sensor 10A of this embodiment, through the processing of the A/D converter 15, the operating portion 16 and the approaching object presence or absence judging portion 8, the presence or absence of the approaching object is judged in accordance with whether the envelop curve of a detection signal of the detector 3 is lower than the predetermined threshold value Vth1 for a time longer than the predetermined time Tth. Accordingly, even when the reflection wave signal of the approaching object is detected as an envelop curve at the upper side of the high-frequency noise as shown in (B-4)(C-5) of Fig. 3, the presence or absence of an approaching object can be surely detected.

### Embodiment 3

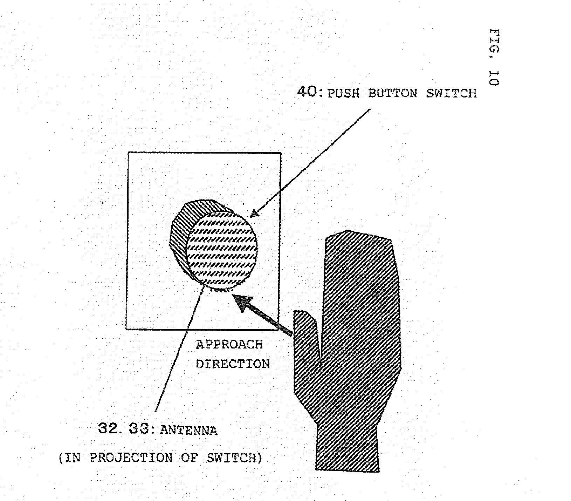

An embodiment 3 of the present invention will be described with reference to Figs. 10 to 13. In the embodiment 3, applications of the impulse sensor 10 to various kinds of facilities will be described.

Fig. 10 shows an example in which the transmission antenna 32 and the reception antenna 33 of the impulse sensor 10 are accommodated in a projection of a push button switch 40. In this case, the sensor circuit 11 of the impulse sensor 10 may be accommodated in the projection or provided at another position, for example, on a control board (not shown).

By accommodating the impulse sensor 10 (at least the transmission antenna 32 and the reception antenna 33) in the push button switch 40 as described above, the approach of a hand of a human who is about to operate the push button can be detected. Such a push button is used as opening/closing operation means at an entrance of a building, opening/closing operation means at a platform of a vehicle, opening/closing operation means at a platform of a ship, opening/closing operation means at a platform of passenger transport means, opening/closing operation means at an entrance of transport means or as operating means for operating a predetermined operation target object. Accordingly, by accommodating the impulse sensor 10 (at least the transmission antenna 32 and the reception antenna 33) in the push button switch 40, a part of a human who approaches to operate these machines or facilities can be detected.

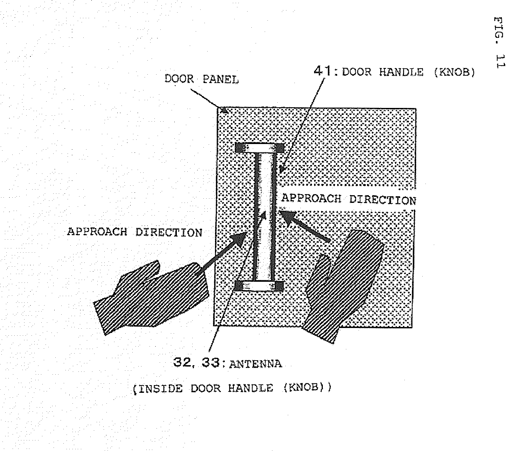

Fig. 11 shows an example in which the transmission antenna 32 and the reception antenna 33 of the impulse sensor 10 are accommodated in a door handle 41. In this case, the sensor circuit 11 of the impulse sensor 10 may be stored in the door handle 41 or provided at another position, for example, on a control board (not shown). Furthermore, the shape of the door handle 41 is not limited to the handle type (rod shape) as shown in Fig. 11, and it may be applied to various shapes such as a lever type, a knob type, a bar type, a flap type, etc.

By providing the impulse sensor 10 (at least the transmission antenna 32 and the reception antenna 33) in the door handle 41 as shown in Fig. 11, the motion of a part of a human body approaching from all sides to the door handle 41 can be detected.

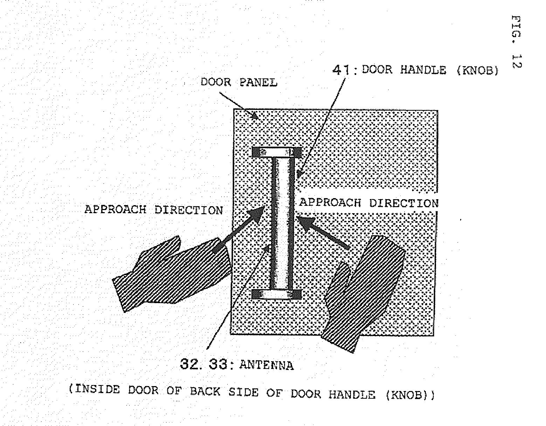

Fig. 12 shows an example in which the transmission antenna 32 and the reception antenna 33 of the impulse sensor 10 are accommodated in a door having a door handle 41 mounted thereon. The impulse sensor 10 (or at least the transmission antenna 32 and the reception antenna 33) are installed in the wall portion on which the door handle serving as an operating portion to be operated by a human like the inside of the door shown in Fig. 11, whereby a part of a human body approaching from the front side of the wall portion can be detected. In this case, the shape of the door handle 41 is not limited to the handle type (rod type) as shown in Fig. 12, and it may be applied to various kinds of shapes such as a lever type, a knob type, a bar type, a flap type, etc.

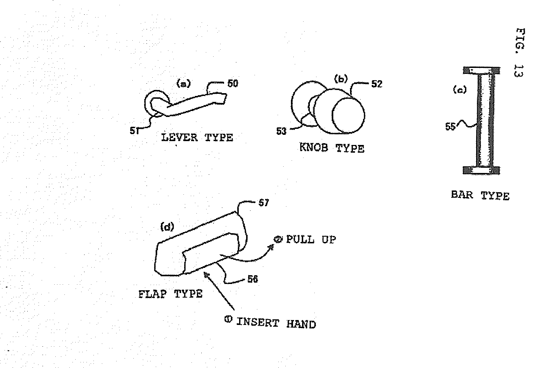

Fig. 13 shows a list of examples of the door handle as examples of the operating portion to which the impulse sensor 10 (or at least the transmission antenna 32 and the reception antenna 33) is applied. The impulse sensor 10 (or at least the transmission antenna 32 and the reception antenna 33) may be installed in each of the lever type, the knob type, the bar type and the flap type as the door handle as shown in Fig. 13.

When these door handles are operated, the impulse sensor 10 may be provided at a position to which the human hand surely approaches. For example, it may be provided inside the lever 50 of a lever type knob handle, or inside a rotational shaft 51 supporting the lever 50, or, furthermore, inside a knob 52, or inside a rotational shaft 53 supporting the knob 52.

In the case of the bar type handle, the impulse sensor 10 is preferably provided in the bar 55. In the case of the flap type door handle, it is provided to the back side of a flap 56, inside a housing portion 57 for supporting the flap 56 or the like.

Furthermore, as described above, the impulse sensor 10 may be provided in the door on which the door handle is set.

### <Modification>

The above embodiments are mainly directed to the detection processing when a part of a human body, for example, a human hand or the like approaches. However, in the embodiments of the present invention, the detection target is not limited to a human. When the dielectric constant of the detection target is known in advance, the gain of the reflection wave may be adjusted on the basis of the dielectric constant. Accordingly, the present invention may be applied to the detection processing for various targets such as animals other than the human beings, machines, etc.

## Claims

1. A processing device that is connected to a sensor for generating an electrical signal varying in connection with approach of a detection target and processes the electrical signal, comprising:
means for extracting the electrical signal from a superposition signal in which the electrical signal varying in connection with the approach of the detection target and a high frequency signal higher in frequency than the electrical signal are superposed; and
means for judging the approach of the detection target from the waveform of the electrical signal.

2. A target object detecting device comprising:
a sensor for generating an electrical signal varying in connection with approach of a detection target;
means for extracting the electrical signal from a superposition signal in which the electrical signal varying in connection with the approach of the detection target and a high frequency signal higher in frequency than the electrical signal are superposed; and
means for judging the approach of the detection target from the waveform of the electrical signal.

3. The target object detecting device according to claim 2, wherein the sensor is equipped with a generator for generating an impulse signal at a predetermined time interval, an emitting portion for emitting the impulse signal, a receiving portion for receiving a reflection signal of the emitted impulse signal from a detection target, and a detecting portion for generating an electrical signal varying with the impulse signal and the reflection signal.

4. The target object detecting device according to claim 3, wherein the emitting portion emits the impulse signal by electromagnetic wave or light, and the receiving portion may receive the reflection signal of electromagnetic wave or light.

5. The target object detecting device according to any one of claims 2 to 4, wherein the sensor is mounted in opening/closing operation means for an entrance of a building, opening/closing operation means for a platform of a vehicle, opening/closing operation means for a platform of a ship, opening/closing operation means of a platform of passenger transporting means, opening/closing operation means for an entrance of transporting means or operating means for operating a predetermined operation target object.

6. The target object detecting device according to any one of claims 2 to 4, wherein the sensor is mounted in the outer wall of an entrance opening/closing portion at which operating means providing an opening/closing function of an entrance of a building is disposed, in the outer wall of an platform opening/closing portion at which opening/closing operation means of an entrance of a vehicle is disposed, in the outer wall of a platform opening/closing portion at which opening/closing operation means of a platform of a ship is disposed, in the outer wall of a platform opening/closing portion at which operation means providing an opening/closing function of a platform of passenger transporting means is disposed, in the outer wall of an entrance opening/closing portion at which operating means providing an opening/closing function of an entrance of transporting means is disposed, or in a housing in which operating means providing a function of operating a predetermined operation target object is disposed.
